# EUROPÄISCHE PATENTSCHRIFT

(11) **EP 4 049 527 B1**
(45) Veröffentlichungstag und Bekanntmachung des Hinweises auf die Patenterteilung: **25.12.2024**
(21) Anmeldenummer: 21202580.3
(22) Anmeldetag: 14.10.2021
(51) Int. Cl.: A01D 41/14

(54) **BANDSCHNEIDWERK**
BELT CUTTING UNIT
COUPE-RUBANS

(30) Priorität: 24.02.2021 DE 102021104432
(43) Veröffentlichungstag der Anmeldung: 31.08.2022
(73) Patentinhaber: CLAAS Selbstfahrende Erntemaschinen GmbH, 33428 Harsewinkel (DE)
(72) Erfinder: Füchtling, Christian, 48317 Drenstein Rinkerode (DE); Gehrmann, Marcus, 33334 Gütersloh (DE)
(74) Vertreter: CLAAS Gruppe

(56) Entgegenhaltungen:
- EP-A1- 1 108 351
- EP-A1- 1 611 781
- EP-A1- 2 387 870
- EP-A1- 2 832 206

## Beschreibung

Die vorliegende Erfindung betrifft ein Bandschneidwerk, umfassend einen Mittenabschnitt sowie zumindest zwei Seitenabschnitte, wobei zumindest an den äußeren Seitenabschnitten zumindest ein Stützrad angeordnet ist, welches jeweils durch einen an einen Hydraulikkreislauf eines Hydrauliksystems angeschlossenen doppeltwirkenden Hydraulikzylinder höhenbeweglich geführt ist.

Aus der EP1611781 B1 ist ein einteiliges Schneidwerk mit durch Hydraulikzylinder höhenverstellbare Stützrädern zur Bodenkopierung bekannt, wobei die Hydraulikzylinder doppeltwirkend betrieben werden.

Aus der EP2832206B1 ist eine Stützradanordnung an einem einteiligen Schneidwerk bekannt, welche über einen doppeltwirkenden Hydraulikzylinder ein Teilgewicht des Schneidwerks aufnehmen und über ein einstellbares Dämpfungssystem an unterschiedliche Arbeitsbedingungen angepasst werden kann.

Die WO2019/023312 A1 beschreibt eine Hydraulikschaltung für Stützräder an einem mehrteiligen Bandschneidwerk mit doppeltwirkenden Hubzylinder, wobei die Stützräder über einen ersten Hydraulikkreis automatisch auf eine definierte Höhe abgesenkt und angehoben und über einen zweiten Hydraulikkreis manuell in der Höhe verändert werden können, wobei bei eingestelltem Abstand, die Kolbenseite durch einen Druckspeicher auf gleichem Druck gehalten wird. Das aus der WO2019/023312 A1 bekannte Bandschneidwerk zeichnet sich durch einen komplexen Aufbau des Gesamthydrauliksystems auf.

Aufgabe der vorliegenden Erfindung ist es, ein Bandschneidwerk der eingangs genannten Art weiterzubilden, welches sich durch einen einfacheren Aufbau des Hydrauliksystems auszeichnet.

Diese Aufgabe wird durch ein Bandschneidwerk gemäß dem Oberbegriff des Anspruches 1 in Verbindung mit den kennzeichnenden Merkmalen des Anspruches 1 gelöst.

Weiterhin wird die Aufgabe durch eine selbstfahrende Erntemaschine gemäß Anspruch 10 gelöst.

Vorteilhafte Weiterbildungen sind Gegenstand der Unteransprüche.

Gemäß dem Anspruch 1 wird ein Bandschneidwerk vorgeschlagen, welches einen Mittenabschnitt sowie zumindest zwei Seitenabschnitte umfasst, wobei zumindest an den äußeren Seitenabschnitten zumindest ein Stützrad angeordnet ist, welches jeweils durch einen an einen Hydraulikkreislauf eines Hydrauliksystems angeschlossenen doppeltwirkenden Hydraulikzylinder höhenbeweglich geführt ist. Erfindungsgemäß ist vorgesehen, dass dem jeweiligen Hydraulikzylinder jeweils ein 3/2-Wegeventil zugeordnet ist, welches im Betrieb des Bandschneidwerkes einen Schaltzustand einnimmt, in welchem Kolbenstangenraum und Kolbenraum des Hydraulikzylinders fluidleitend verbunden sind, oder dass dem jeweiligen Hydraulikzylinder jeweils zwei 2/2-Wegeventile zugeordnet sind, welche im Betrieb des Bandschneidwerkes einen Schaltzustand einnehmen, in welchem Kolbenstangenraum und Kolbenraum des Hydraulikzylinders fluidleitend verbunden sind. Dadurch wird erreicht, dass bei der Verwendung von doppeltwirkenden Hydraulikzylindern jeweils nur ein gemeinsamer geschlossener Hydraulikkreislauf gespeist werden muss. Im Betrieb des Bandschneidwerks, d.h. während eines Erntevorgangs, bewirkt die den Kolbenstangenraum und den Kolbenraum fluidleitend miteinander verbindende Schaltstellung, dass aufgrund von Einfederungsbewegungen Hydraulikfluid in einer tankseitigen Hydraulikleitung hin und her gepumpt bzw. gesogen werden muss.

Mittels des jeweiligen 3/2-Wegeventils oder alternativ der jeweils zwei 2/2-Wegeventile wird erreicht, dass der jeweilige doppeltwirkende Hydraulikzylinder wechselweise als einfachwirkender oder doppeltwirkender Hydraulikzylinder nutzbar ist. Die 2/2-Wegeventile können die Funktion des 3/2-Wegeventils identisch abbilden, so dass die nachstehenden Ausführungen auch für diese Alternative gelten sollen.

Gemäß einer Ausführung des Bandschneidwerks können die Seitenabschnitte jeweils durch ein Rahmengelenk mit dem Mittenabschnitt um eine normal zur Längsachse des Schneidwerks im Wesentlichen horizontal verlaufende Schwenkachse schwenkbar verbunden sein. Alternativ kann das Bandschneidwerk einen durchgehenden starren Rahmen aufweisen, der die Seitenabschnitte und den Mittenabschnitt miteinander verbindet.

Mittels des Hydrauliksystems lassen sich die Stützräder der Seitenabschnitte in mehrerlei Hinsicht nutzen. Neben der reinen Abstützfunktion der schwenkbaren Seitenabschnitte des Bandschneidwerks lässt sich am Vorgewende und für den Transport durch das Schalten des Kolbenraum in Richtung Tank ein Ausheben des Stützrades erreichen. Zudem kann die Kraft eingestellt werden, mit der das jeweilige Stützrad durch den Hydraulikzylinder belastet wird.

Erfindungsgemäß ist dem jeweiligen Hydraulikzylinder ein Drosselrückschlagventil mit einem Druckspeicher zugeordnet, welche in einer jeweiligen eine gemeinsame Druckquelle des Hydrauliksystems mit dem jeweiligen Hydraulikzylinder verbindenden Druckleitung angeordnet sind. Der Druckspeicher stabilisiert den Druck während des laufenden Betriebes des Bandschneidwerks. Auslenkungen eines Stützrades führen zu einer Bewegung des Kolbens und damit zu einer Druckänderung zwischen dem aufgrund der Schaltstellung des 3/2-Wegeventils oder der zwei 2/2-Wegeventile fluidleitend verbundenen Kolbenstangenraum und Kolbenraum, die durch das Drosselrückschlagventil und den Druckspeicher aufgenommen wird. Das Hydrauliksystem lässt sich somit ähnlich einem Feder-Dämpferelement betreiben, womit erreicht wird, dass Stöße und Unebenheit gut abgefedert werden.

Insbesondere nimmt das jeweilige 3/2-Wegeventile für das Ausheben oder Einfahren der Stützräder einen Schaltzustand ein, in welchem der Kolbenraum des jeweiligen Hydraulikzylinders mit einem gemeinsamen Tank des Hydrauliksystems verbunden ist.

Des Weiteren kann dem Drosselrückschlagventil ein schaltbares Ventil, insbesondere ein 3/2-Wege-Proportionalventil, vorgeschaltet sein, welches dazu eingerichtet ist, den Druck zu regeln, mit dem das jeweilige Stützrad beaufschlagt ist. Entsprechend der erforderlichen Anpassung der Position des jeweiligen Stützrades an den Untergrund, wird der Druck durch eine entsprechende Ansteuerung des Ventils erhöht, verringert oder konstant gehalten.

Der Aushub- und Absenkvorgang der Stützräder am Vorgewende erfolgt maßgeblich durch das 3/2 Wegeventil bzw. die zwei 2/2-Wegeventile. Das dem Drosselrückschlagventil vorgeschaltete schaltbare Ventil dient dazu, sowohl beim Absenken wie auch beim Anheben dem Hydrauliksystem Hydraulikfluid zuzuführen.

Dabei kann dem schaltbaren Ventil ein 2/2-Wegeventil nachgeschaltet sein, welches einfach dicht ausgeführt ist. Dadurch kann ein ungewolltes Abfließen von Hydraulikflüssigkeit über ein als 3/2-Wege-Proportionalventil ausgeführtes schaltbares Ventil in den Tank vermieden werden.

Erfindungsgemäß ist in einer den Kolbenstangenraum mit der Druckleitung verbindenden Ausgleichsleitung ein Rückschlagventil angeordnet. Das Rückschlagventil kann in Abhängigkeit von der Schaltstellung des 3/2-Wegeventils die Ausgleichsleitung von der Druckleitung trennen oder mit dieser verbinden.

Bevorzugt kann in der jeweiligen Druckleitung ein Drucksensor angeordnet sein. Mittels des Drucksensors lässt sich das Verhalten des Stützrades respektive des Hydraulikzylinders aufgrund von Stößen und/oder Unebenheiten erfassen und auswerten.

Gemäß einer Weiterbildung kann eine mit dem Bandschneidwerk über ein Kommunikationsmittel verbindbare Steuerungsvorrichtung vorgesehen sein, welche dazu eingerichtet ist, die Ventile des Hydrauliksystems anzusteuern. Dabei kann die Steuerungsvorrichtung an dem Bandschneidwerk angeordnet ein oder an einer selbstfahrenden Erntemaschine, mit welcher das Bandschneidwerk verbunden wird. Die Steuerungsvorrichtung kann zur Auswertung von Signalen der Drucksensoren des Hydrauliksystems eingerichtet sein.

Weiter bevorzugt kann die Steuerungsvorrichtung zur automatischen Ansteuerung der Ventile in Abhängigkeit von erfassten Betriebsparametern eingerichtet sein, die durch zumindest am Bandschneidwerk angeordnete Sensoren bestimmt werden. Alternativ oder zusätzlich kann die Steuerungsvorrichtung dazu eingerichtet sein, in Abhängigkeit von erfassten Betriebsparametern vorzunehmende Einstellungen vorzuschlagen.

Bevorzugt kann die Steuerungsvorrichtung dazu eingerichtet sein, dass 3/2-Wegeventil anzusteuern, um die Stützräder am Vorgewende oder zu Transportzwecken einzufahren bzw. in eine Transportstellung zu überführen. Das Einfahren und anschließende Ausfahren kann im Rahmen eines Vorgewendemanagements automatisiert erfolgen.

Weiterhin ist die Steuerungsvorrichtung dazu eingerichtet, die Ventile des Hydrauliksystems anzusteuern, um das Hydrauliksystem als Feder-Dämpfer-System zu betreiben, indem zumindest das 3/2-Wegeventil in eine Schaltstellung überführt wird, in der Kolbenstangenraum und Kolbenraum des Hydraulikzylinders des jeweiligen Stützrades fluidleitend verbunden sind und nur einen geschlossenen Hydraulikkreislauf bilden, der durch die Druckquelle gespeist wird.

Insbesondere kann die Steuerungsvorrichtung dazu eingerichtet sein, das 3/2-Wegeventil anzusteuern, um den auf die Stützräder durch die Hydraulikzylinder aufgebrachten Druck unabhängig von einer Schnitthöhe im laufenden Betrieb zu adaptieren. Dieses ist zum Beispiel bei einem Wechsel von einem Betrieb des Bandschneidwerkes mit einer gewünschten Schnitthöhe zu einem Betrieb mit auf dem Boden aufliegenden dem Messerbalken der Fall. Zudem kann durch eine, insbesondere automatische, Druckanpassung die Steuerungsvorrichtung auf wechselnde Konturen und Positionsabweichungen feinfühlig reagiert werden.

Des Weiteren kann die Steuerungsvorrichtung dazu eingerichtet sein, das 3/2-Wegeventil in Abhängigkeit von Sensorsignalen zumindest einer Bodenabtasteinrichtung eines jeweiligen Seitenabschnitts anzusteuern. Der Querausgleich, welcher das Verschwenken des Bandschneidwerks um eine virtuelle Pendelachse zur Anpassung der Position des Bandschneidwerks an Bodenkonturen beschreibt, kann während des Arbeitsbetriebs durch die zumindest höhenverstellbaren Stützräder erfolgen. Angesteuert werden die doppeltwirkenden Hydraulikzylinder mittels der Sensorsignale der Bodenabtasteinrichtungen, mit denen der Bodenabstand des Bandschneidwerks in an sich bekannter Weise laufend gemessen wird. Bei den Bodenabtasteinrichtungen kann es sich beispielsweise um schwenkbewegliche Bodentaster handeln.

Die eingangs gestellte Aufgabe wird des Weiteren durch eine selbstfahrende Erntemaschine mit einer Aufnahmevorrichtung zur Aufnahme und lösbaren Anordnung eines Vorsatzgerätes gelöst, indem das Vorsatzgerät als ein Bandschneidwerk gemäß einem der Ansprüche 1 bis 9 ausgeführt ist. Insbesondere ist die selbstfahrende Erntemaschine als ein Mähdrescher mit einer Steuerungsvorrichtung ausgeführt, die zur Ansteuerung des Hydrauliksystems eingerichtet ist.

Die vorliegende Erfindung wird nachstehend anhand eines in den Zeichnungen dargestellten Ausführungsbeispieles näher erläutert.

Es zeigen:
- Fig. 1: eine schematische Ansicht eines Bandschneidwerkes;
- Fig. 2: eine perspektivische Teilansicht des Bandschneidwerkes gemäß Fig. 1;
- Fig. 3: eine perspektivische Teilansicht des Bandschneidwerkes gemäß Fig. 2 von hinten;
- Fig. 4: eine Teilansicht eines Seitenabschnittes des Bandschneidwerks von hinten;
- Fig. 5: einen exemplarischen Schaltplan für eine Ansteuerung von Stützrädern des Bandschneidwerkes in einer ersten Schaltstellung; und
- Fig. 6: den Schaltplan gemäß Fig. 5 in einer geänderten Schaltstellung.

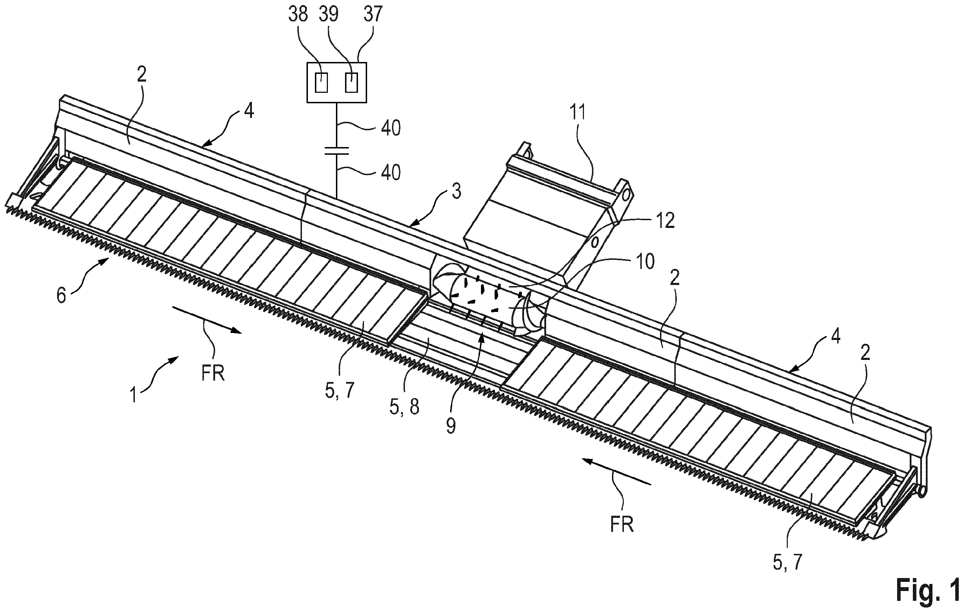

Die Darstellung in Fig. 1 zeigt eine schematische Darstellung eines als Bandschneidwerk 1 ausgebildeten Vorsatzgerätes. Das Bandschneidwerk 1 weist hier und vorzugsweise einen segmentierten Rahmen 2 auf. Das Bandschneidwerk kann auch mit einem durchgehenden Rahmen ausgeführt sein. Das Bandschneidwerk 1 umfasst einen Mittenabschnitt 3 und mindestens zwei benachbart zu dem Mittenabschnitt 3 angeordnete Seitenabschnitte 4. An dem Mittenabschnitt 3 und den Seitenabschnitten 4 ist auf der dem segmentierten Rahmen 2 gegenüberliegenden Vorderseite des Bandschneidwerkes 1 ein bodenkopierender Messerbalken 6 angeordnet, der sich im Wesentlichen über die gesamte Breite des Bandschneidwerkes 1 erstreckt. Der Messerbalken kann auch starr ausgeführt sein. Das von dem Messerbalken 6 abgetrennte Erntegut wird einer hinter dem Messerbalken 6 angeordneten Fördervorrichtung 5 zugeführt, die auf den jeweiligen Seitenabschnitten 4 als mindestens ein endlos umlaufendes Förderband 7 ausgeführt ist, welches parallel zur Längsachse des Bandschneidwerks 1 umläuft. Die endlos umlaufenden Förderbänder 7 sind benachbart zu dem Mittenabschnitt 3 angeordnet, um von dem Messerbalken 6 abgeschnittenes Erntegut seitwärts in Richtung des Mittenabschnittes 3 zu transportieren, was durch Pfeile FR veranschaulicht ist, und einer Einzugsvorrichtung 9 zuzuführen. Der Mittenabschnitt 3 umfasst ebenfalls eine als zumindest ein endlos umlaufendes Förderband 8 ausgebildete Fördervorrichtung 5. Das zumindest eine Förderband 8 fördert dabei quer zur Förderrichtung FR der Förderbänder 7 der Seitenabschnitte 4. Andere Ausgestaltungen der Fördervorrichtung 5 im Bereich des Mittenabschnitts 3 sind denkbar. Die Einzugsvorrichtung 9 ist als eine antreibbare Einzugswalze 10 ausgeführt. Die Einzugsvorrichtung 9 führt das von den endlos umlaufenden Förderbändern 7 bzw. 8 dem Mittenabschnitt 3 seitlich zugeführte Erntegut einer in dem Rahmen 2 des Mittenabschnitts 3 vorgesehenen, hinter der Einzugswalze 10 befindlichen Öffnung 12 zu, durch welche das Erntegut durch einen an einem nicht dargestellten Mähdrescher befindlichen Einzugskanal 11, an dem das Bandschneidwerk 1 lösbar befestigt ist, dem Mähdrescher zur weiteren Verarbeitung zugeführt wird.

Wie in Fig. 1 angedeutet, ist dem Bandschneidwerk 1 eine Steuerungsvorrichtung 37 zugeordnet, die unmittelbar an dem Schneidwerk 1 angeordnet sein kann oder an dem Mähdrescher. Die Steuerungsvorrichtung 37 umfasst eine Recheneinheit 38 sowie eine Speichereinheit 39. Die Steuerungsvorrichtung 37 ist durch ein Kommunikationsmittel 40 drahtlos oder drahtgebunden mit den Drucksensoren 26 verbunden, um von den Drucksensoren 26 bereitgestellte Signale zu empfangen und mittels geeigneter Algorithmen, die in der Speichereinheit 39 hinterlegt sind, der Recheneinheit 38 auswerten zu können.

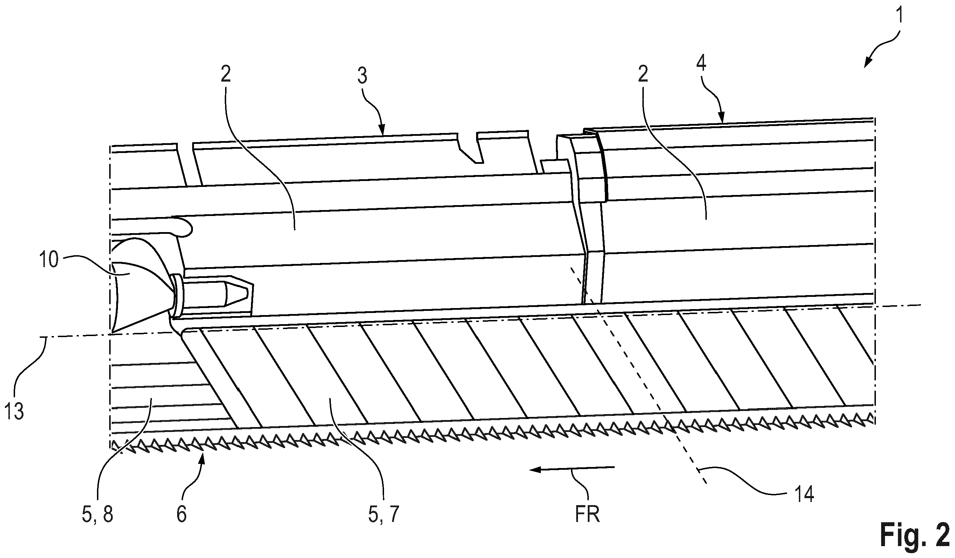

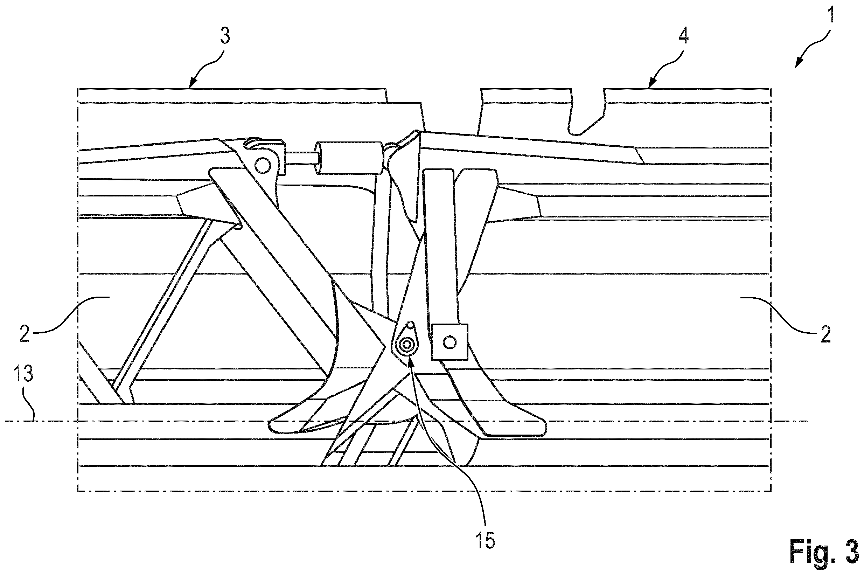

In Fig. 2 ist eine perspektivische Teilansicht des Bandschneidwerkes 1 gemäß Fig. 1 dargestellt. Fig. 3 zeigt eine Ansicht des Bandschneidwerkes 1 gemäß Fig. 2 von hinten. Die Seitenabschnitte 4 sind jeweils durch ein Rahmengelenk 15, wie in Fig. 3 dargestellt, mit dem Mittenabschnitt 3 um eine normal zur Längsachse 13 des Bandschneidwerks 1 im Wesentlichen horizontal verlaufende Schwenkachse 14 schwenkbar verbunden. Die Seitenabschnitte 4 sind identisch aufgebaut und spiegelbildlich einander gegenüberliegend an dem Mittenabschnitt 3 angeordnet.

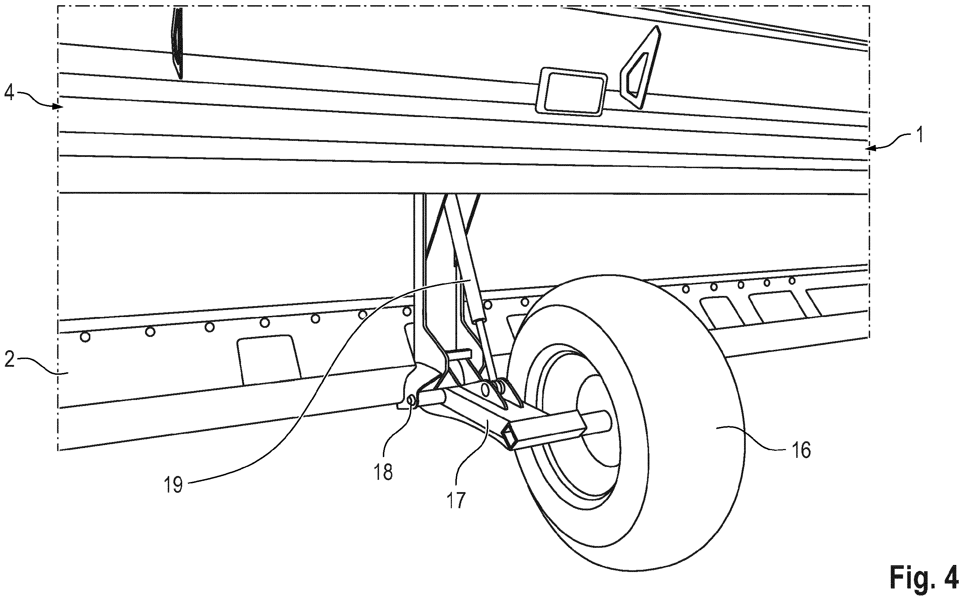

Die Darstellung in Fig. 4 zeigt eine Teilansicht eines der Seitenabschnitte 4 des Bandschneidwerks 1 von hinten. An dem Rahmen 2 des Seitenabschnitts 4 ist zumindest ein Stützrad 16 mittels einer Konsole 17 um eine zur Längsachse 13 achsparallele Schwenkachse 18 abgelenkt. Ein doppeltwirkender Hydraulikzylinder 19 ist an dem Rahmen 2 und der Konsole 17 angelenkt. Mittels des doppeltwirkenden Hydraulikzylinders 19 lässt sich das Stützrad 16 in seiner Position verstellen. So lässt sich das Stützrad 16 in eine Transportstellung überführen, in welcher das Stützrad 16 in Richtung des Rahmens 2 eingeschwenkt ist. Des Weiteren lässt sich mittels des Hydraulikzylinders 19 die Kraft einstellen, mit der das jeweilige Stützrad 16 den Seitenabschnitt 4 gegenüber dem Boden abstützt.

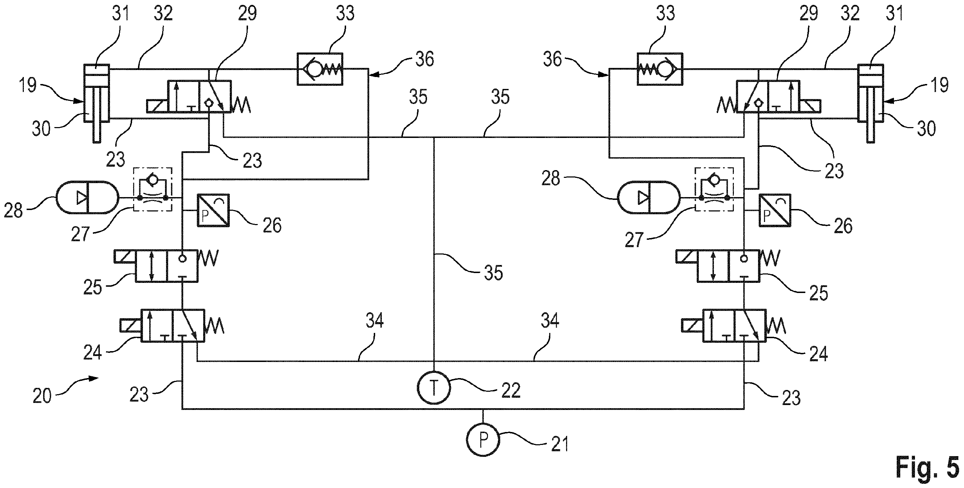

In Fig. 5 ist ein exemplarischer Schaltplan für eine Ansteuerung von Stützrädern 16 des Bandschneidwerkes 1 in einer ersten Schaltstellung dargestellt. Zur Ansteuerung des zumindest einen Stützrades 16 des jeweiligen Seitenabschnitts 4 ist Hydrauliksystem 20 an dem Bandschneidwerk 1 vorgesehen, welches eine gemeinsame Druckquelle 21 sowie einen gemeinsamen Tank 22 umfasst. Der Aufbau des Hydrauliksystems 20 ist spiegelbildlich für die Seitenabschnitt 4 ausgeführt, so dass die nachfolgende Beschreibung der weiteren Komponenten des Hydrauliksystems 20 für beide Seitenabschnitt 4 Gültigkeit hat.

Von der gemeinsamen Druckquelle 21, die eine Hydraulikpumpe der selbstfahrenden Erntemaschine sein kann, führt eine Druckleitung 23 zu einem als 3/2-Wege Proportionalventil ausgeführten schaltbaren Ventil 24 und einem diesem, optional nachgeschalteten, 2/2-Wegeventil 25, welches einfach dicht ausgeführt ist. Durch das 2/2-Wegeventil 25 kann ein Leckagestrom durch Abließen von Hydraulikfluid über das schaltbare Ventil 24 verhindert werden. Das schaltbare Ventil 24 kann, wie in Fig. 5 dargestellt, einen Schaltzustand einnehmen, in welchem die Druckleitung über eine Hydraulikleitung 34 mit dem Tank 22 verbunden ist. Das 2/2-Wegeventil 25 befindet sich in einer Schaltstellung, in der das Abließen von Hydraulikfluid aus der Druckleitung über das schaltbare Ventil 24 in den Tank 22 verhindert wird.

Ein dem als 3/2-Wege Proportionalventil ausgeführten schaltbaren Ventil 24 bzw. dem 2/2-Wegeventil 25 nachgeordneter Drucksensor 26 überwacht den Hydraulikdruck in der Druckleitung 23. Dem jeweiligen Hydraulikzylinder 19 ist ein Drosselrückschlagventil 27 mit einem Druckspeicher 28 zugeordnet, welches in der die gemeinsame Druckquelle 21 des Hydrauliksystems 20 mit dem Hydraulikzylinder 19 verbindenden Druckleitung 23 angeordnet sind.

Weiterhin ist dem Hydraulikzylinder 19 ein 3/2-Wegeventil 29 zugeordnet, welches im Erntebetrieb des Bandschneidwerkes 1 einen Schaltzustand einnimmt, in welchem Kolbenstangenraum 30 und Kolbenraum 31 des Hydraulikzylinders 19 fluidleitend verbunden sind. Durch die fluidleitende Verbindung von Kolbenstangenraum 30 und Kolbenraum 31 des doppeltwirkenden Hydraulikzylinder 19 wird ein gemeinsamer geschlossener Hydraulikkreislauf 36 ausgebildet, der von der Druckquelle 21 gespeist werden muss. Im Betrieb des Bandschneidwerks 1, d.h. während eines Erntevorgangs, bewirkt die den Kolbenstangenraum 30 und den Kolbenraum 31 miteinander fluidleitend verbindende Schaltstellung des 3/2-Wegeventils 29, dass aufgrund von Einfederungsbewegungen Hydraulikfluid in einer tankseitigen Hydraulikleitung 35 hin und her gepumpt bzw. gesogen werden muss. Dies kann alternativ durch die Verwendung zweier 2/2-Wegeventile anstelle des 3/2-Wegeventils 29 erreicht werden. Das 3/2-Wegeventils 29 bzw. die zwei 2/2-Wegeventile dient dazu, den doppeltwirkenden Hydraulikzylinder 19 wahlweise als einfachwirkenden oder doppeltwirkenden Hydraulikzylinder verwenden zu können. Als einfachwirkender Hydraulikzylinder wird der doppeltwirkenden Hydraulikzylinder 19 verwendet, wenn ein Ausgleich von Bodenunebenheiten durch ein Feder-Dämpfer-System, wie weiter unten beschrieben wird, im laufenden Betrieb des Bandschneidwerks 1 erforderlich ist. In seiner Eigenschaft als doppeltwirkender Hydraulikzylinder wird der doppeltwirkende Hydraulikzylinder 19 verwendet, wenn das jeweilige Stützrad 16 in eine ausgehobene Stellung oder eine abgesenkte Stellung, beispielsweise am Vorgewende, überführt wird

Der Kolbenraum 31 ist durch eine Ausgleichsleitung 32 über das schaltbare 3/2-Wegeventil 29 sowie unmittelbar mit der Druckleitung 23 verbunden. Ein in der Ausgleichsleitung 32 angeordnetes Rückschlagventil 33 verhindert, dass von der Druckleitung 23 unter Umgehung des 3/2-Wegeventils 29 Hydraulikfluid in den Kolbenraum 31 gelangt.

Das 3/2-Wegeventil 29 verbindet in der dargestellten Schaltstellung über eine Hydraulikleitung 35 die Ausgleichsleitung 32 mit dem Tank 22. In dieser Schaltstellung lässt sich der Zylinder 19 vollständig einfahren, um das Stützrad 16 in seine Transportstellung zu überführen. Gleiches gilt für das Erreichen eines Vorgewendes während des Erntebetriebes, indem durch das Schalten des 3/2-Wegeventils 29 der Kolbenraum 31 mit dem Tank 22 verbunden wird, um das Ausheben des Stützrades zu bewirken.

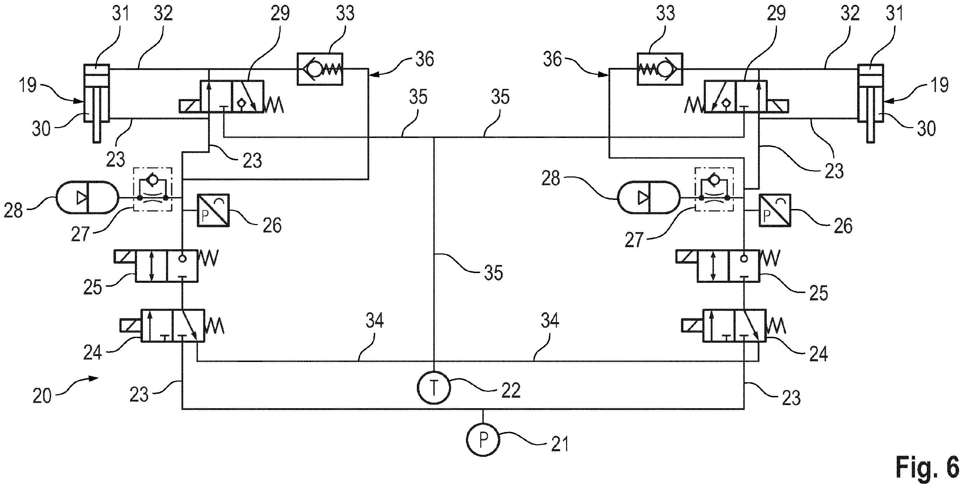

In Fig. 6 ist der Schaltplan gemäß Fig. 5 in einer geänderten Schaltstellung des 3/2-Wegeventils 29 dargestellt. Gemäß dieser Schaltstellung des 3/2-Wegeventils 29 sind der Kolbenstangenraum 30 und der Kolbenraum 31 miteinander fluidleitend verbunden. In dieser Schaltstellung arbeitet der doppeltwirkende Hydraulikzylinder 19 in Verbindung mit dem Drosselrückschlagventil 27 und dem zugehörigen Druckspeicher 28 als Feder-Dämpfer-System des Bandschneidwerks 1. Somit können Stöße und Unebenheiten des Bodens abgefedert werden. Gegenüber einfachen Feder-Dämpfer-Systemen weist das Hydrauliksystem 20 den Vorteil auf, dass durch eine Variation des Drucks im geschlossenen Hydraulikkreislauf 36 auf wechselnde Konturen des Bodens und Positionsabweichungen feinfühlig reagiert werden kann.

Weiterhin lässt sich durch das Hydrauliksystem 20 die Druckbelastung der Stützräder 16 auch während des Erntebetriebes variieren. Dies kann schnitthöhenunabhängig erfolgen.

Die Steuerungsvorrichtung 37 steht durch das Kommunikationsmittel 40 auch mit den einstellbaren Ventilen 24, 25, und 29 in Verbindung, um von diesen Signale zu empfangen und Stellsignale an diese Ventile 24, 25 und 29 zu übermitteln. Die Steuerungsvorrichtung 37 ist dazu eingerichtet, das schaltbare Ventil 24 in Abhängigkeit von Sensorsignalen einer - nicht dargestellten - Bodenabtasteinrichtung anzusteuern. Weiterhin ist die Steuerungsvorrichtung 37 dazu eingerichtet, das schaltbare Ventil 24 anzusteuern, um den auf die Stützräder 16 durch die doppeltwirkenden Hydraulikzylinder 19 aufgebrachten Druck unabhängig von einer Schnitthöhe im laufenden Betrieb zu adaptieren.

**Bezugszeichenliste**

| | | | |
|---|---|---|---|
| 1 | Bandschneidwerk | 34 | Hydraulikleitung |
| 2 | Rahmen | 35 | Hydraulikleitung |
| 3 | Mittenabschnitt | 36 | Hydraulikkreislauf |
| 4 | Seitenabschnitt | 37 | Steuerungsvorrichtung |
| 5 | Fördermittel | 38 | Recheneinheit |
| 6 | Messerbalken | 39 | Speichereinheit |
| 7 | Förderband | 40 | Kommunikationsmittel |
| 8 | Förderband | | |
| 9 | Einzugsvorrichtung | FR | Pfeil |
| 10 | Einzugswalze | | |
| 11 | Einzugskanal | | |
| 12 | Öffnung | | |
| 13 | Längsachse | | |
| 14 | Schwenkachse | | |
| 15 | Rahmengelenk | | |
| 16 | Stützrad | | |
| 17 | Konsole | | |
| 18 | Schwenkachse | | |
| 19 | Hydraulikzylinder | | |
| 20 | Hydrauliksystem | | |
| 21 | Druckquelle | | |
| 22 | Tank | | |
| 23 | Druckleitung | | |
| 24 | Schaltbares Ventil | | |
| 25 | 2/2-Wegeventil | | |
| 26 | Drucksensor | | |
| 27 | Drosselrückschlagventil | | |
| 28 | Druckspeicher | | |
| 29 | 3/2-Wegeventil | | |
| 30 | Kolbenstangenraum | | |
| 31 | Kolbenraum | | |
| 32 | Ausgleichsleitung | | |
| 33 | Rückschlagventil | | |

## Patentansprüche

1. Bandschneidwerk (1), umfassend einen Mittenabschnitt (3) sowie zumindest zwei Seitenabschnitte (4), wobei zumindest an den äußeren Seitenabschnitten (1) zumindest ein Stützrad (16) angeordnet ist, welches jeweils durch einen an einen Hydraulikkreislauf eines Hydrauliksystems (20) angeschlossenen doppeltwirkenden Hydraulikzylinder (19) höhenbeweglich geführt ist, **dadurch gekennzeichnet, dass** dem jeweiligen Hydraulikzylinder (19) jeweils ein 3/2-Wegeventil (29) zugeordnet ist, welches im Betrieb des Bandschneidwerkes (1) einen Schaltzustand einnimmt, in welchem Kolbenstangenraum (30) und Kolbenraum (31) des Hydraulikzylinders (19) fluidleitend verbunden sind, oder dass dem jeweiligen Hydraulikzylinder (19) jeweils zwei 2/2-Wegeventile zugeordnet sind, welche im Betrieb des Bandschneidwerkes (1) einen Schaltzustand einnehmen, in welchem Kolbenstangenraum (30 )und Kolbenraum (31) des Hydraulikzylinders (19) fluidleitend verbunden sind, wobei dem jeweiligen Hydraulikzylinder (19) ein Drosselrückschlagventil (27) mit einem Druckspeicher (28) zugeordnet ist, welche in einer jeweiligen eine gemeinsame Druckquelle (21) des Hydrauliksystems (20) mit dem jeweiligen Hydraulikzylinder (19) verbindenden Druckleitung (23) angeordnet sind und in einer den Kolbenstangenraum (30) mit der Druckleitung (23) verbindenden Ausgleichsleitung (32) ein Rückschlagventil (33) angeordnet ist.

2. Bandschneidwerk (1) nach Anspruch 1, **dadurch gekennzeichnet, dass** das jeweilige 3/2-Wegeventile (29) für das Ausheben oder Einfahren der Stützräder (16) einen Schaltzustand einnimmt, in welchem der Kolbenraum (31) des jeweiligen Hydraulikzylinders (19) mit einem gemeinsamen Tank (22) verbunden ist.

3. Bandschneidwerk (1) nach Anspruch 2, **dadurch gekennzeichnet, dass** dem Drosselrückschlagventil (27) ein schaltbares Ventil, insbesondere ein 3/2-Wege-Proportionalventil (24), vorgeschaltet ist, welches dazu eingerichtet ist, den Druck zu regeln, mit dem das jeweilige Stützrad (16) beaufschlagt ist.

4. Bandschneidwerk (1) nach Anspruch 3, **dadurch gekennzeichnet, dass** dem schaltbaren Ventil (24) ein 2/2-Wegeventil (25) nachgeschaltet ist.

5. Bandschneidwerk (1) nach einem der vorangehenden Ansprüche, **dadurch gekennzeichnet, dass** in der jeweiligen Druckleitung (23) ein Drucksensor (26) angeordnet ist.

6. Bandschneidwerk (1) nach einem der vorangehenden Ansprüche, **dadurch gekennzeichnet, dass** eine mit dem Bandschneidwerk (1) über ein Kommunikationsmittel (40) verbindbare Steuerungsvorrichtung (37) vorgesehen ist, welche dazu eingerichtet ist, die Ventile (24, 25, 29) des Hydrauliksystems (20) anzusteuern.

7. Bandschneidwerk (1) nach Anspruch 6, **dadurch gekennzeichnet, dass** die Steuerungsvorrichtung (37) dazu eingerichtet ist, dass 3/2-Wegeventil (29) anzusteuern, um die Stützräder (16) am Vorgewende oder zu Transportzwecken einzufahren

8. Bandschneidwerk (1) nach Anspruch 6 oder 7, **dadurch gekennzeichnet, dass** die Steuerungsvorrichtung (37) dazu eingerichtet ist, das 3/2-Wegeventil (29) anzusteuern, um den auf die Stützräder (16) durch die Hydraulikzylinder (19) aufgebrachten Druck unabhängig von einer Schnitthöhe im laufenden Betrieb zu adaptieren.

9. Bandschneidwerk (1) nach Anspruch 6 bis 8, **dadurch gekennzeichnet, dass** die Steuerungsvorrichtung (37) dazu eingerichtet ist, das Drosselrückschlagventil (27) in Abhängigkeit von Sensorsignalen zumindest einer Bodenabtasteinrichtung eines jeweiligen Seitenabschnitts (4) anzusteuern.

10. Selbstfahrende Erntemaschine mit einer Aufnahmevorrichtung (11) zur Aufnahme und lösbaren Anordnung eines Vorsatzgerätes, **dadurch gekennzeichnet, dass** das Vorsatzgerät als ein Bandschneidwerk (1) gemäß einem der Ansprüche 1 bis 9 ausgeführt ist.

## Claims

1. A belt cutting unit (1) comprising a central section (3) as well as at least two lateral sections (4), wherein at least one support wheel (16), which is driven in a height-adjustable manner by a respective double-acting hydraulic cylinder (19) connected to a hydraulic circuit of a hydraulic system (20), is disposed on at least the outer lateral sections (1), **characterized in that** a respective 3/2-way directional control valve (29) which, during operation of the belt cutting unit (1), takes up a switch position in which the piston rod chamber (30) and piston chamber (31) of the hydraulic cylinder (19) are in fluid communication, is associated with the respective hydraulic cylinder (19), or **in that** respectively two 2/2-way directional control valves which, during operation of the belt cutting unit (1), take up a switch position in which the piston rod chamber (30) and piston chamber (31) of the hydraulic cylinder (19) are in fluid communication, are associated with the respective hydraulic cylinder (19), wherein a throttle check valve (27) with an accumulator (28), which are disposed in a respective pressure line (23) connecting a common pressure source (21) of the hydraulic system (20) to the respective hydraulic cylinder (19), are associated with the respective hydraulic cylinder (19), and a check valve (33) is disposed in a compensating line (32) connecting the piston rod chamber (30) to the pressure line (23).

2. The belt cutting unit (1) according to claim 1, **characterized in that** for raising or retracting the support wheels (16), the respective 3/2-way directional control valve (29) takes up a switch position in which the piston chamber (31) of the respective hydraulic cylinder (19) is connected to a common reservoir (22).

3. The belt cutting unit (1) according to claim 2, **characterized in that** a selectable valve, in particular a 3/2-way proportional valve (24), which is configured to regulate the pressure which is applied to the respective support wheel (16), is connected upstream of the throttle check valve (27).

4. The belt cutting unit (1) according to claim 3, **characterized in that** a 2/2-way directional control valve (25) is connected downstream of the selectable valve (24).

5. The belt cutting unit (1) according to one of the preceding claims, **characterized in that** a pressure sensor (26) is disposed in the respective pressure line (23).

6. The belt cutting unit (1) according to one of the preceding claims, **characterized in that** a control device (37) which is configured to control the valves (24, 25, 29) of the hydraulic system (20) is provided, which can be connected to the belt cutting unit (1) via a communication means (40).

7. The belt cutting unit (1) according to claim 6, **characterized in that** the control device (37) is configured to control the 3/2 directional control valve (29) in order to retract the support wheels (16) at the headland or for transport purposes.

8. The belt cutting unit (1) according to claim 6 or claim 7, **characterized in that** the control device (37) is configured to control the 3/2 directional control valve (29) in order to adapt the pressure applied by the hydraulic cylinder (19) to the support wheels (16) independently of a cutting height during ongoing operations.

9. The belt cutting unit (1) according to claims 6 to 8, **characterized in that** the control device (37) is configured to control the throttle check valve (27) as a function of sensor signals from at least one ground sensing device of a respective lateral section (4).

10. A self-propelled harvesting machine with a pickup device (11) for picking up and for the detachable disposition of a front attachment, **characterized in that** the front attachment is configured as a belt cutting unit (1) as claimed in one of claims 1 to 9.

## Revendications

1. Tablier de coupe à tapis (1), comprenant une partie médiane (3) et au moins deux parties latérales (4), sachant qu'il est prévu, au moins sur les parties latérales (1) extérieures, au moins une roue d'appui (16) qui est guidée avec possibilité de déplacement en hauteur par un vérin hydraulique (19) à double effet raccordé à un circuit hydraulique d'un système hydraulique (20), **caractérisé en ce qu'**est associé au vérin hydraulique (19) respectif, respectivement un distributeur 3/2 (29) qui, lors du fonctionnement du tablier de coupe à tapis (1), occupe un état de commutation dans lequel la chambre de tige de piston (30) et la chambre de piston (31) du vérin hydraulique (19) sont reliées de manière à conduire le fluide, ou **en ce que** sont associés au vérin hydraulique (19) respectif, chaque fois deux distributeurs 2/2 qui, lors du fonctionnement du tablier de coupe à tapis (1), occupent un état de commutation dans lequel la chambre de tige de piston (30) et la chambre de piston (31) du vérin hydraulique (19) sont reliées de manière à conduire le fluide, sachant qu'est associé au vérin hydraulique (19) respectif, un clapet anti-retour à étranglement (27) avec un accumulateur de pression (28) qui sont disposés dans une conduite de pression (23) respective, reliant une source de pression (21) commune du système hydraulique (20) au vérin hydraulique (19) respectif, et qu'un clapet anti-retour (33) est disposé dans une conduite de compensation (32) reliant la chambre de tige de piston (30) à la conduite de pression (23).

2. Tablier de coupe à tapis (1) selon la revendication 1, **caractérisé en ce que**, pour le déploiement ou l'escamotage des roues d'appui (16), le distributeur 3/2 (29) respectif occupe un état de commutation dans lequel la chambre de piston (31) du vérin hydraulique (19) respectif est reliée à un réservoir (22) commun.

3. Tablier de coupe à tapis (1) selon la revendication 2, **caractérisé en ce qu'**un distributeur commutable, en particulier un distributeur 3/2 proportionnel (24), est placé en amont du clapet anti-retour à étranglement (27) et est agencé pour régler la pression qui est appliquée à la roue d'appui (16) respective.

4. Tablier de coupe à tapis (1) selon la revendication 3, **caractérisé en ce qu'**un distributeur 2/2 (25) est placé en aval du distributeur commutable (24).

5. Tablier de coupe à tapis (1) selon une des revendications précédentes, **caractérisé en ce qu'**un capteur de pression (26) est disposé dans la conduite de pression (23) respective.

6. Tablier de coupe à tapis (1) selon une des revendications précédentes, **caractérisé en ce qu'**il est prévu un dispositif de commande (37) qui peut être relié au tablier de coupe à tapis (1) par l'intermédiaire d'un moyen de communication (40) et qui est agencé pour commander les distributeurs (24, 25, 29) du système hydraulique (20).

7. Tablier de coupe à tapis (1) selon la revendication 6, **caractérisé en ce que** le dispositif de commande (37) est conçu pour activer le distributeur 3/2 (29) aux fins d'escamoter les roues d'appui (16) en tournière ou en vue du transport.

8. Tablier de coupe à tapis (1) selon la revendication 6 ou 7, **caractérisé en ce que** le dispositif de commande (37) est conçu pour activer le distributeur 3/2 (29) aux fins d'adapter la pression appliquée aux roues d'appui (16) par les vérins hydrauliques (19) au cours du fonctionnement, indépendamment d'une hauteur de coupe.

9. Tablier de coupe à tapis (1) selon les revendications 6 à 8, **caractérisé en ce que** le dispositif de commande (37) est conçu pour activer le clapet anti-retour à étranglement (27) en fonction de signaux de capteur d'au moins un dispositif de balayage du sol de chaque partie latérale (4) respective.

10. Machine de récolte automotrice comprenant un dispositif de fixation (11) destiné au montage et à la mise en place amovible d'un outil frontal, **caractérisée en ce que** l'outil frontal est réalisé sous la forme d'un tablier de coupe à tapis (1) selon une des revendications 1 à 9.
